# EUROPEAN PATENT SPECIFICATION

(11) **EP 1 683 976 B1**
(45) Date of publication and mention of the grant of the patent: **08.02.2012**
(21) Application number: 05003638.3
(22) Date of filing: 21.02.2005
(51) Int. Cl.: A47B 96/14, F16B 7/14

(54) **Telescopic rod with tensioning mechanism**
Teleskopstange mit Spannmechanismus
Perche téléscopique avec méchanisme tenseur

(30) Priority: 19.02.2004 IT TV20040015
(43) Date of publication of application: 26.07.2006
(73) Proprietor: Extendo S.r.l., 35010 Trebaseleghe (PD) (IT)
(72) Inventor: Gallo, Francesco, 30030 Caltana di Santa Maria di Sala VE (IT)
(74) Representative: Susanetto, Carlo

(56) References cited:
- DE-A1- 2 640 610
- US-A- 2 871 044
- US-A- 5 662 429

## Description

The present invention relates to a telescopic pole including the characteristics described in the introduction to the main claim.

The pole, object of the present invention is telescopic and is used particularly in the context of home furnishing and interior decorating, and in the context of shop furnishing and decoration.

Known systems comprise a telescopic pole composed of a (lower) fixed portion and an (upper) mobile portion, normally both tubular in shape. Said systems also include a plurality of mechanical elements, among which, certain levering elements, connected to each other in such a manner that allows the two tubular portions to be tightened to each other during an initial closing stage, followed by the lifting of the mobile portion in relation to the fixed portion during a second stage in order to allow tensioning of the pole according to the measurement of the distance between the floor and the ceiling. The tension of the pole between the floor and the ceiling is ensured by the combined action of the aforesaid extension movement and the counter-positioning of the elastic compressible elements, whether these are of a spring type, or made of rubber material, or of a different kind positioned either on the upper or lower portion of the pole (or on both portions).

Given their particular configuration, said mechanical elements can be of a considerable overall size, resulting as being unnecessarily cumbersome, especially during assembly operations performed by the end user; this creates a further important limit, the fact that it is impossible to mount any accessory in the areas occupied by the mechanical tensioning elements.

In certain examples known in the art, said mechanical elements are completely located on the exterior of said tubular elements, while in other examples, they are completely set within the tubular sections that form the pair of telescopic poles.

In order to overcome this problem, a known solution provides for mechanical elements that are dimensioned and connected to each other in order to use one or more hollow channels created on the upper (mobile) portion of the pole in order to create a relative blocking system between the lower portion (fixed) and the upper portion (mobile) during the initial lever closing stage. As the natural closing motion of the lever continues, during the second stage this also creates the upward extension movement between the lower (fixed) portion and the upper (mobile) portion of the pole. In this manner said appropriately dimensioned and connected mechanical elements can be of a less cumbersome size especially during assembly operations.

The first part of the action of the aforesaid movement provided by this type of known solution is the blocking step that involves a lever closing system whose pivoting part is secured to the lower (fixed) portion and is configured with an eccentric profile, or is integral to a radial cam shaped element so that during its closing action the lever acts directly on a central element (tie rod) which in turn has one end attached to the aforesaid lever, and the other end blocked inside a hollow channel located in the upper (mobile) portion. This creates a type of relative blocking between the upper and lower portions of the pole.

The second part of the action of the aforesaid movement provided by this type of known solution is the rising step produced by the action of a cam element integral to the lever which acts directly on the end part of the lower tubular portion or on a collar that covers this portion, due to the rotation of said lever, thus provoking the lifting the upper (mobile) portion of the pole for the distance necessary to place the two portions of the pole in tension between the floor and the ceiling.

However, this known solution implies certain problems, including the fact that the actuating mechanical elements are still cumbersome and protrude with respect to the perimeter of the telescopic pole, preventing any accessories from being mounted in the sections where said lever expansion elements are located.

Another problem is caused by the distance between the part of the tie rod blocked in the hollow channel In the upper (mobile) portion ot the pole and the part of the tie rod integral to the lever, since this varies according to the difference in thickness as a result of pole production cycles, which entails an adjustment of said distance during the assembly stage, with significant time loss.

Another known solution previously mentioned, comprises a plurality of mechanical and elastic elements completely contained within the interior of the upper and lower polygonal tubular profile. However, this system involves complicate re-adjustment of the tensioning control system in the lowest part of the lower (fixed) polygonal profile using distancers and tie rods.

US 5652429 discloses an extendible rod which comprises two rod-shaped elements slidable telescopically inside each other, and an expander device for locking the rod-heaped elements against sliding in an extended position of the rod, wherein the expander device comprises a linkage acting between first and second constraint members, being each associated with a respective one of the rod-shaped elements to drive them through a stroke of mutual separation, and wherein the length of that stroke may be adjusted.

The basic problem of the present invention is to realise a telescopic pole with a tensioning mechanism that is structurally and functionally conceived to overcome the limits described previously in relation to the aforesaid known art. The context of said problem also involves the aim of making telescopic pole assembly and dis-assembly operations easier.

This problem is solved, and the aim is achieved by the present invention through a pole equipped with a tensioning mechanism realised according to the appended claims.

The characteristics and advantages of this invention will be made clearer in the detailed description and its preferred embodiment, illustrated in an explanatory but by no means limitative manner with reference to the appended drawings wherein:

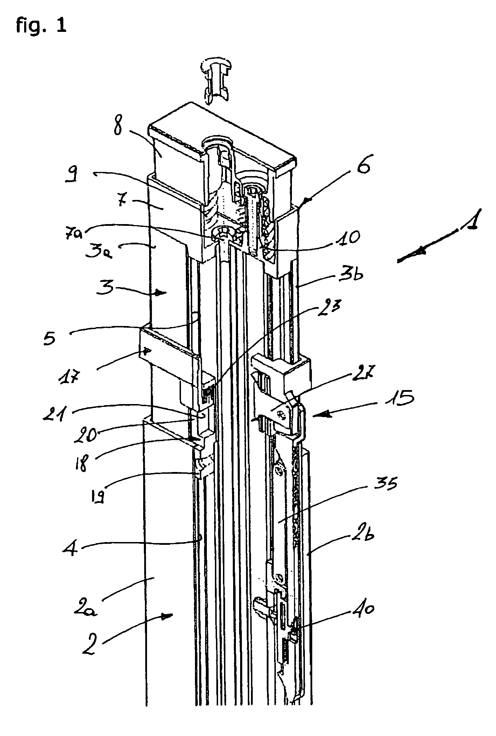

- Figure 1 is a partially cutaway top perspective view of a telescopic pole with a tensioning mechanism realised according to the present invention,

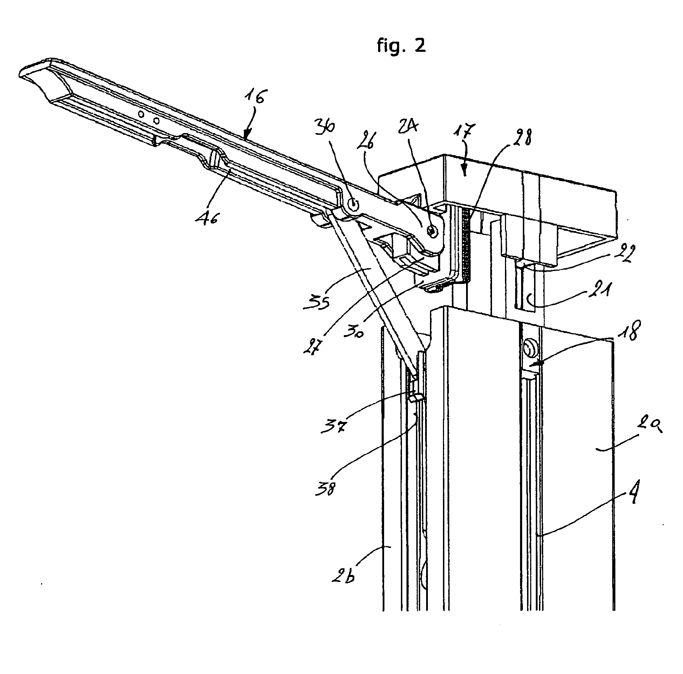

- Figure 2 is a bottom perspective view of certain details of the pole as shown in figure 1, with the tensioning mechanism in release position,

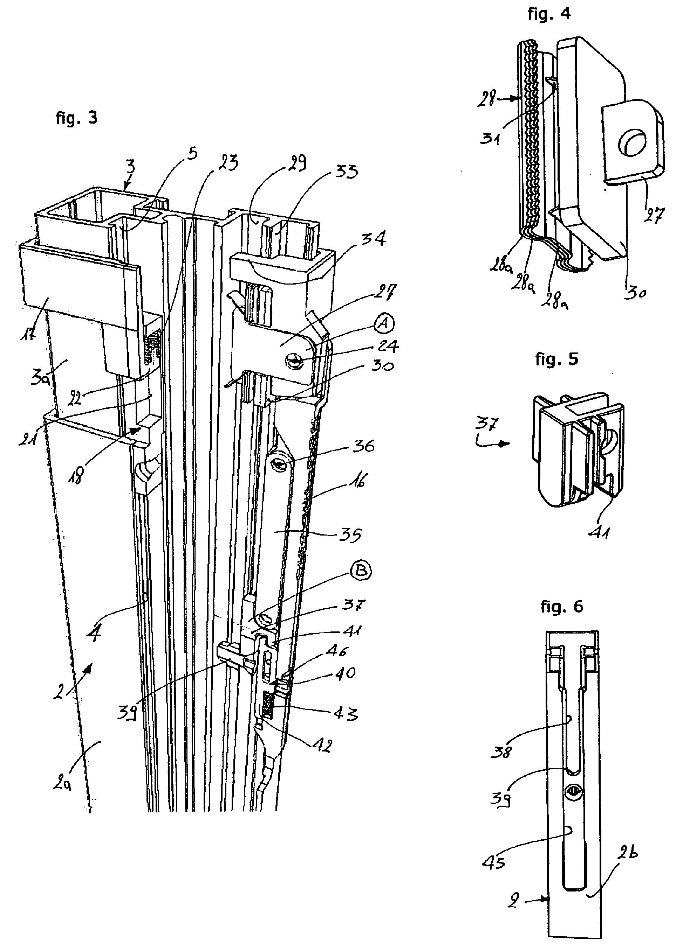

- Figure 3 is a half-section top perspective view of the pole as shown in figure 1 in blocking and end-of-run positions.
- Figures 4 and 5 are enlarged perspective views of the details A and B of the pole as shown in figure 3,
- Figure 6 is a front view of a part of the pole as shown in figure 1 in blocking position,

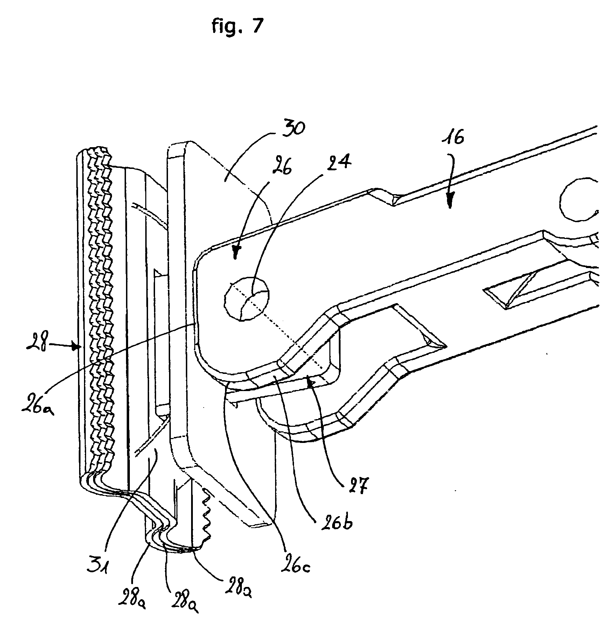

- Figure 7 is an enlarged perspective view of a detail of the tensioning mechanism of the pole of figure 1,
- Figures 8, 9 and 10 are longitudinal section views of the pole shown in figure 1 in release position, in blocking position at 45°, and in end-of-run blocking position,
- Figure 11 is a partial top view of in cross-section of the pole as shown in figure 9,
- Figures 12 and 13 are longitudinal section views of end details of the pole as shown in figure 1 in release position and in compression position,
- Figure 14 is a perspective view of a further detail of the pole as shown in figure 1,
- Figure 15 is an enlarged view in longitudinal section of a detail of the pole as shown in figure 1.

In all figures, the numeral 1 generally refers to a telescopic pole equipped with a two step movements tensioning mechanism (tightening and rising), realised according to the present invention.

The pole 1 comprises a lower tubular profile 2 and an upper tubular profile 3 that slides inside the telescopic pole. The profiles 2 and 3 have a rectangular section and are composed of opposed sides 2a, 3a, which are wider, a front face 2b, 3b, and rear faces 2c, 3c which are narrower than the sides.

Rectangular shaped grooves 4 are machined along the sides of the lower profile, and corresponding grooves 5 are machined along the sides of the upper profile 3 in a position so that they form an extension of the grooves 4. The grooves 5 are nested inside the grooves 4 so that the two profiles are coupled together to slide along each other. Accordingly the grooves 5 of the upper profile present a greater transverse dimension than the grooves 4.

The sides 2a and 3a of the profiles are the parts designed to support, in use, the accessory elements such as shelving on the telescopic pole.

Elastic end elements 6 are mounted at the free ends of the tubular profiles 2 and 3 and are intended for contact with the floor and the ceiling, and are adapted to absorb and elastically counter the tensioning mechanism action of the pole. The end elements 6 have a first portion 7 integrally attached to the end of the tubular profiles (by means of a screw 7a) and a second portion 8 that is mobile in relation to the first portion. A pair of springs 9 are inserted between the two portions to maintain them at the correct distance from each other.

It is also contemplated that the pole is only equipped with one end element 6 positioned at the end of one of the two tubular profiles.

The two portions 7 and 8 have a rectangular section like the tubular profiles, thus allowing a rotation-proof coupling between the elastic end elements and the tubular profiles, as well as between the two portions.

A centring means is positioned between the two portions comprising a pair of conical protrusions 10 and corresponding conical recesses 11 formed in the second portion 8. In this manner, it is possible to centre the elastic end element in relation to the upper or lower tubular profile during the compression movement.

Pole 1 comprises a tensioning mechanism 15 conceived to tighten the two tubular profiles together during an initial part of the closing action, and to raise the upper profile 3 in relation to the lower profile 2 during the second part of the closing action.

The mechanism 15 comprises a lever 16 articulated on a collar 17, which is secured to the upper end of the lower profile 2 with a limited moving capacity.

The plan size of the collar 17 is not greater than the lower tubular profile and it is limited to slide along two brackets 18 fixed to the lower profile 2. More precisely, the brackets 18 are fixed with one portion 19 in the opposite grooves 4 so that they are inserted inside the grooves, and a portion 20 of the bracket extends towards the upper profile parallel thereto.

Recesses are present inside the inner part of the respective portions 20 of the brackets 18, where teeth 22 of the collar 17 slide in a lengthwise direction, to permit limited collar movement in relation to the brackets, and to the lower profile integral thereto.

Furthermore, return springs 23 are inserted between the brackets 18 and the teeth 22 of collar 17 to elastically retain the collar 17 in the direction of the lower profile 2.

The lever 16 is articulated on the front face of the collar 17 by means of a pivot 24; said lever rotates on a basically vertical plane, parallel to the sides 2a, 3a of profiles 2 and 3.

The lever 16 comprises a fork head 26 inside which one end of a tie rod 27 is received, also fixed to the pivot 24. The tie rod 27 extends horizontally towards the front face 3b of the upper profile 3 and comprises a friction element 28 at the opposite end from the pivot 24; said friction element sliding in a groove 29 of the upper profile 3.

Preferably the friction element 28 comprises a plurality of elastic elements 28a, in the form of small plates, each one having an omega-shaped profile. In this manner, the friction element 28 presents an advantageous "leaf spring action" providing greater elasticity for the same total thickness of the element.

Preferably the elastic elements 28a are three in number.

A small strike plate 30 is inserted between the friction element 28 and the pivot 24 on the tie rod 27, parallel to the friction element 28 and sliding along the rod 27, and an arch spring 31 is inserted between the strike plate 30 and the friction element 28 to push the strike plate 30 against the head 26 of lever 16.

The head 26 has a cam profile with a substantially flat surface 26a and incidental in relation to the direction of extension of the lever 16, a flat surface 26b substantially parallel to said direction and a curved surface 26c connecting the surfaces 26a and 26b. Said surfaces are arranged so that the distance between surface 26a and pivot 24 is less than the distance between surface 26a and surface 26b.

In this manner, when lever 16 is activated, oscillating to pass from the position with surface 26a in contact with the strike plate 30 to the position where the strike plate makes contact with the surface 26b or 26c, the distance between the friction element 28 and the strike plate 30 is reduced by counter action with the arched spring 31.

When the strike plate approaches the friction element this leads to a gripping action by means of the wings 33 that extend from the groove 29 parallel to the strike plate 30.

Furthermore, in order to increase the grip on the wings 33, the elastic elements 28a preferably have serrated edges.

A tooth 34 of collar 17 is inserted into groove 29, the vertical sliding action of the collar 17 in relation to the upper profile 3.

The tensioning mechanism of pole 1 also comprises an articulated connecting rod 35 hinged at its first end on lever 16 onto a pivot 36, parallel to and distanced from pivot 24, and attached at the second end to a shoe 37 that slides inside a hollow channel 38 located on the front face 2b of the lower tubular profile 2.

The shoe is able to slide inside the hollow channel until it abuts against a stop (for example the bottom of the hollow channel 38) fixed to the lower profile 2.

The action of the tensioning mechanism of pole 1 develops as follows, also schematically illustrated in the figures from 8 to 10.

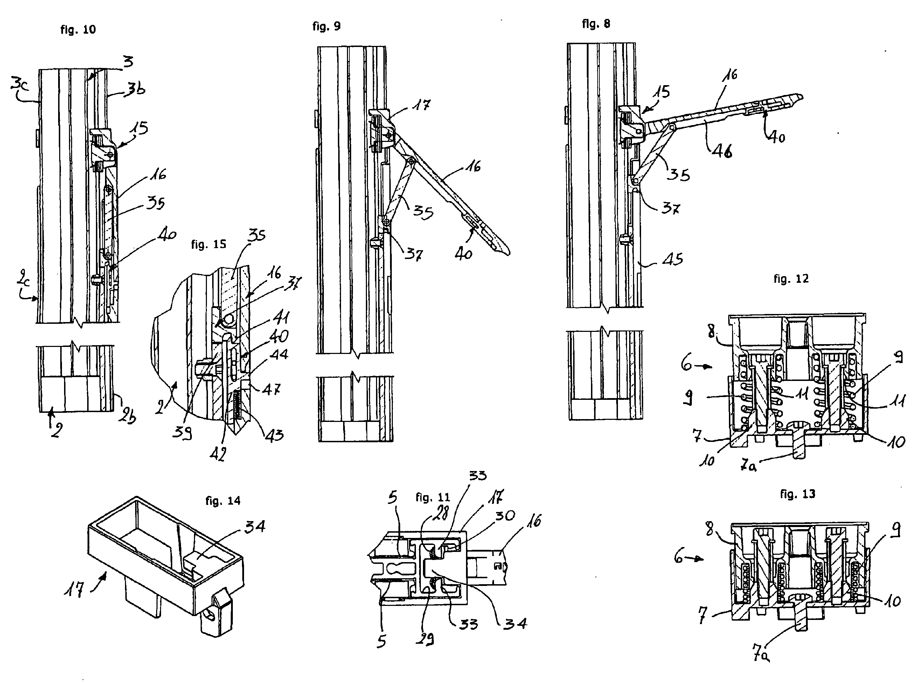

The initial release position (figure 8) involves the rotation of the lever 16 so that its head 26 makes contact with surface 26a on the strike plate 30. In this condition the strike plate 30 and the friction element 28 are maintained at a certain distance from each other by the spring 31 and do not perform a gripping action on the wings 33 so that the upper tubular profile 3 can slide freely inside the lower tubular profile 2.

Normally in this condition, the two profiles are slid to extend between the floor and the ceiling.

At this point the lever 16 is rotated in a downward direction around pivot 24 as far as a position of approximately 45° (figure 9), with the vertical position being defined by profile 2 and 3.

In this condition the head 26 has approached the strike plate 30 to element 28 gripping therebetween the wings 33 of the upper profile 3. In this manner the upper profile 3 is secured to collar 17. The shoe 37 slides along the hollow channel 38 until it abuts against the stop 39 in this exact position.

Due to the elasticity of the friction element 28 and especially due to its "leaf spring" configuration, the wings 33 are always gripped with constant and effective force, because any dimensional tolerance in the upper and lower profiles is absorbed by the elastic deformation of the friction element.

Ensuing lever 16 rotation in a downward direction will lead to the lifting of collar 17 (and therefore of upper profile 3 secured to the collar) from the lower profile 2 determined by the screw jack action of the connecting rod 35. The lifting of the collar 17 occurs by the sliding of the teeth 22 inside the recesses 21 of the bracket 18.

In this position (figure 10), the lever is parallel to the lower tubular profile 2 and is received inside a housing 45 positioned on the front face 2b of pipe 2. Furthermore, the connecting rod 35 is also completely received in a seat 46 located in the lever 16.

The elastic compression action exercised by the elastic end elements 6 counters the extension of the upper profile 3, so that when the lever 16 closure movement is completed the pole 1 is blocked and tensioned between the ceiling and the floor.

The lever 16 is also equipped with a release safety device 40 adapted to prevent the lever from being lifted accidentally releasing the pole 1 from its blocked and tensioned position.

The safety device 40 (figure 15) comprises an element 42 that slides along the lever and is biased by a spring 43. A safety device release button 44 is provided on element 42, which protrudes from the opposite side of the lever in a recess 47 thereof. Element 42 is positioned in alignment with shoe 37, so that when the lever 16 is rotated to closure position (figure 10) it grips a tooth 41 of shoe 37 to counter the action of the spring 43.

Therefore the present invention solves the problem described previously by achieving all the proposed aims.

## Claims

1. Telescopic pole (1) comprising a lower tubular profile, an upper tubular profile (3) that slides inside the lower tubular profile (2) and a pole tensioning mechanism (15) comprising:
o a lever (16) articulated on a secured collar (17), able to slide to a limited extent on the lower profile,
o a tie rod (27) connected to the lever, and comprising a friction element (28) that slides inside a groove (29) in the upper tubular profile, and a blocking and lifting system connected to the lever and the tie rod so that during the first closure movement step of the lever, the tie rod is axially moved by ' means of the friction element to block the upper tubular profile in relation to the collar, and during the second lever closure step, the collar is moved and lifted from the lower tubular profile,
o **characterized in that** the friction element (28) is resilient enough to compensate any possible dimensional tolerance between the upper tubular profile (3) and lower tubular profile (2) and **in that** the friction element (28) comprises a plurality of elastic elements (28a), all overlaid on top of one another in an axial direction.

2. Telescopic pole (1) according to claim 1, wherein each elastic element (28a) has a small plate configuration with substantially omega profiled.

3. Telescopic pole (1) according to one or more of the previous claims, wherein a housing (45) is located on the lower tubular profile (2) to receive the lever (16) when in closed position.

4. Telescopic pole (1) according to one or more of the previous claims, wherein said lower tubular profile (2) presents a pair of opposite sides (2a) on which accessories can be mounted, and the lever (16) is articulated on a face set between the two opposite sides, oscillating on a plane parallel to said sides.

5. Telescopic pole (1) according to one or more of the previous claims, wherein said collar (17) is fixed to the lower tubular profile by means of a pair of brackets (18) which are fixed to one end of the lower tubular profile (2), extended towards the upper tubular profile (3) and received into respective grooves located on the latter.

6. Telescopic pole (1) according to claim 5, wherein two recesses are located on the brackets. The respective (22) teeth of the collar (17) slide inside said recesses and the brackets (18) have a spatial shape projection included in the spatial shape projection of the lower tubular profile (2).

7. Telescopic pole (1) according to claim 5 or 6, wherein elastic means (23) are inserted between the brackets (18) and the collar (17) to provoke the return action of the collar towards the brackets.

8. Telescopic pole (1) according to one or more of the previous claims, wherein the tie rod (27) is connected to the lever (16) by means of the lever articulation pivot (24).

9. Telescopic pole (1) according to claim 8, wherein the blocking and lifting system comprises a cam head (26) of the lever (16) and a cam head small strike plate (30) parallel to the friction element (28), so that during the first step of the closure movement of the lever, the distance between the friction element and the strike plate is reduced to grip there between one of the wings (33) of the groove (29) of the upper tubular profile (3) inside which the friction element (28) slides.

10. Telescopic pole (1) according to claim 9, wherein an arch spring (31) is inserted between the friction element (28) and the strike plate (30) to maintain a distance between the strike plate and the friction element.

11. Telescopic pole (1) according to one or more of the previous claims, wherein the blocking and lifting system comprises a connecting rod (35) articulated on one end to the lever (16) and attached at the other end to a shoe (37) that slides in a hollow channel (38) in the lower tubular profile (2).

12. Telescopic pole (1) according to claim 11, wherein an stop is provided on the lower profile (2) to stop the shoe (37) when the lever (16) has completed the first step of the closure movement.

13. Telescopic pole (1) according to claim 12, wherein a release safety device (40) is mounted in said lever (16) to hook up said sliding shoe (37) when the lever closure movement is completed.

14. Telescopic pole (1) according to claim 13, wherein the safety device (40) can be released by means of a press button (44) accessible from the exterior of the lever (16), said press button being housed inside a recess (47) of the lever.

15. Telescopic pole (1) according to one or more of the previous claims, wherein elastic elements (6) are mounted at each free end of the upper (3) or lower tubular profiles (2) to absorb the lifting movement of the upper tubular profile in relation to the lower tubular profile, said elastic end elements being coupled with the upper or lower tubular profile by means of a rotation-proof coupling.

16. Telescopic pole (1) according to claim 15, wherein a centering means (10;11) is inserted between the elastic end elements (6) and the upper or lower tubular profile to centre the elastic end element in relation to the lower or upper tubular profile during its compression movement.

17. Telescopic pole (1) according to one or more of the previous claims, wherein said upper and lower tubular profiles (3;2) present grooves (5;4) in a longitudinal direction aligned with each other, the groove (5) of one profile (3) being nested inside the groove (4) of the other profile (2) to allow the sliding coupling of said upper and lower profiles.

## Patentansprüche

1. Teleskopstange (1), umfassend ein unteres Rohrprofil, ein oberes Rohrprofil (3), das in dem unteren Rohrprofil (2) gleitet, und einen Stangenspannmechanismus (15), umfassend:
- einen Hebel (16), angelenkt an einem gesicherten Kragen (17), welcher in begrenztem Maße auf dem unteren Profil gleiten kann,
- einen Zugstab (27), verbunden mit dem Hebel und umfassend ein Reibungselement (28), das in einer Nut (29) in dem oberen Rohrprofil gleitet, und ein mit dem Hebel und der Zugstange verbundenes Blockier- und Anhebesystem, so dass während des ersten Schließbewegungsschritts des Hebels die Zugstange mittels des Reibungselements axial bewegt wird, um das obere Rohrprofil bezüglich des Kragens zu blockieren, und der Kragen während des zweiten Hebelschließschritts bewegt und von dem unteren Rohrprofil angehoben wird,
- **dadurch gekennzeichnet, dass** das Reibungselement (28) nachgiebig genug ist, um jegliche mögliche Maßtoleranz zwischen dem oberen Rohrprofil (3) und dem unteren Rohrprofil (2) zu kompensieren, und **dadurch**, dass das Reibungselement (28) eine Mehrzahl von elastischen Elementen (28a) umfasst, die sich alle in axialer Richtung übereinander überlagern.

2. Teleskopstange (1) nach Anspruch 1, wobei jedes elastische Element (28a) eine kleine Plattenkonfiguration mit im Wesentlichen omega-Profil aufweist.

3. Teleskopstange (1) nach einem oder mehreren der vorhergehenden Ansprüche, wobei sich auf dem unteren Rohrprofil (2) ein Gehäuse (45) befindet, um den Hebel (16) in geschlossener Position aufzunehmen.

4. Teleskopstange (1) nach einem oder mehreren der vorhergehenden Ansprüche, wobei das untere Rohrprofil (2) ein Paar von gegenüberliegenden Seiten (2a) aufweist, an denen Zubehör montiert werden kann, und der Hebel (16) an einer zwischen den gegenüberliegenden Seiten platzierten Fläche angelenkt ist, oszillierend in einer Ebene parallel zu den Seiten.

5. Teleskopstange (1) nach einem oder mehreren der vorhergehenden Ansprüche, wobei der Kragen (17) an dem unteren Rohrprofil fixiert ist mittels eines Paars von Haltern (18), welche an einem Ende des unteren Rohrprofils (2) fixiert sind, sich in Richtung des oberen Rohrprofils (3) erstrecken und in entsprechenden, an dem letzteren befindlichen Nuten aufgenommen sind.

6. Teleskopstange (1) nach Anspruch 5, wobei sich an den Haltern zwei Ausnehmungen befinden, wobei die entsprechenden Zähne (22) des Kragens (17) in den Ausnehmungen gleiten und die Halter (18) eine in der räumlichen Formprojektion des unteren Rohrprofils (2) enthaltene räumliche Formprojektion aufweisen.

7. Teleskopstange (1) nach Anspruch 5 oder 6, wobei elastische Mittel (23) zwischen die Halter (18) und den Kragen (17) eingeführt sind, um die Rückkehraktion des Kragens in Richtung der Halter zu bewirken.

8. Teleskopstange (1) nach einem oder mehreren der vorhergehenden Ansprüche, wobei die Zugstange (27) mit dem Hebel (16) mittels des Hebelgelenkstifts (24) verbunden ist.

9. Teleskopstange (1) nach Anspruch 8, wobei das Blockier- und Anhebesystem einen Nockenkopf (26) des Hebels (16) und ein kleines Nockenkopf-Schließblech (30) parallel zu dem Reibungselement (28) umfasst, so dass während des ersten Schritts der Schließbewegung des Hebels der Abstand zwischen dem Reibungselement und dem Schließblech reduziert wird, um dazwischen einen der Flügel (33) der Nut (29) des oberen Rohrprofils (3) zu greifen, in dem das Reibungselement (28) gleitet.

10. Teleskopstange (1) nach Anspruch 9, wobei eine Bogenfeder (31) zwischen dem Reibungselement (28) und dem Schließblech (30) eingeführt ist, um einen Abstand zwischen dem Schließblech und dem Reibungselement zu erhalten.

11. Teleskopstange (1) nach einem oder mehreren der vorhergehenden Ansprüche, wobei das Blockier- und Anhebesystem eine Verbindungsstange (35) umfasst, welche an einem Ende an dem Hebel (16) angelenkt und an dem anderen Ende an einem Schuh (37) angebracht ist, der in einem hohlen Kanal (38) in dem unteren Rohrprofil (2) gleitet.

12. Teleskopstange (1) nach Anspruch 11, wobei ein Anschlag auf dem unteren Profil (2) bereitgestellt ist, um den Schuh (37) zu stoppen, wenn der Hebel (16) den ersten Schritt der Schließbewegung abgeschlossen hat.

13. Teleskopstange (1) nach Anspruch 12, wobei eine Lösesicherheitseinrichtung (40) in dem Hebel (16) montiert ist, um den Gleitschuh (37) einzuhaken, wenn die Hebelschließbewegung abgeschlossen ist.

14. Teleskopstange (1) nach Anspruch 13, wobei die Sicherheitseinrichtung (40) mittels einer von dem Äußeren des Hebels (16) zugänglichen Drucktaste (44) gelöst werden kann, wobei die Drucktaste in einer Ausnehmung (47) des Hebels beherbergt ist.

15. Teleskopstange (1) nach einem oder mehreren der vorhergehenden Ansprüche, wobei elastische Elemente (6) an jedem freien Ende des oberen (3) und unteren Rohrprofils (2) montiert sind, um die Anhebebewegung des oberen Rohrprofils bezüglich des unteren Rohrprofils abzudämpfen, wobei die elastischen Endelemente mit dem oberen oder unteren Rohrprofil mittels einer rotationssicheren Kopplung gekoppelt sind.

16. Teleskopstange (1) nach Anspruch 15, wobei ein Zentriermittel (10; 11) zwischen die elastischen Endelemente (6) und das obere oder untere Rohrprofil eingeführt ist, um das elastische Endelement bezüglich des unteren oder oberen Rohrprofils während seiner Kompressionsbewegung zu zentrieren.

17. Teleskopstange (1) nach einem oder mehreren der vorhergehenden Ansprüche, wobei das obere und untere Rohrprofil (3; 2) Nuten (5; 4) in einer Längsrichtung zueinander ausgerichtet aufweisen, wobei die Nut (5) eines der Profile (3) in der Nut (4) des anderen Profils (2) geschachtelt ist, um die gleitende Kopplung des oberen und unteren Profils zu erlauben.

## Revendications

1. Perche télescopique (1) comprenant un profilé tubulaire inférieur, un profilé tubulaire supérieur (3) qui coulisse à l'intérieur du profilé tubulaire inférieur (2) et un mécanisme de tensionnement de perche (15) comprenant :
- un levier (16) articulé sur un collier fixé (17), et capable de coulisser sur une étendue limitée sur le profil est inférieur,
- une barre de liaison (27) connectée au levier et comprenant un élément de friction (28) qui coulisse à l'intérieur d'une gorge (29) dans le profilé tubulaire supérieur, et un système de blocage et de levage connecté au levier et à la barre de liaison de telle sorte que pendant la première étape du mouvement de fermeture du levier, la barre de liaison est axialement déplacée au moyen de l'élément à friction pour bloquer le profilé tubulaire supérieur en relation avec le collier, et pendant la seconde étape de fermeture du levier le collier est déplacé et soulevé depuis le profilé tubulaire inférieur,
- **caractérisé en ce que** l'élément à friction (28) est suffisamment élastique pour compenser toute tolérance dimensionnelle éventuelle entre le profilé tubulaire supérieur (3) et le profilé tubulaire inférieur (2) et **en ce que** l'élément à friction (28) comprend une pluralité d'éléments élastiques (28a), tous superposés les uns sur les autres en direction axiale.

2. Perche télescopique (1) selon la revendication 1, dans laquelle chaque élément élastique (28a) a une configuration en forme de petite plaque avec un profil sensiblement en oméga.

3. Perche télescopique (1) selon l'une ou plusieurs des revendications précédentes, dans laquelle un boîtier (45) est placé sur le profilé tubulaire inférieur (2) pour recevoir le levier (16) lorsqu'il est en position fermée.

4. Perche télescopique (1) selon l'une ou plusieurs des revendications précédentes, dans laquelle ledit profilé tubulaire inférieur (2) présente une paire de côtés opposés (2a) sur lesquels peuvent être montés des accessoires, et le levier (16) est articulé sur une face placée entre les deux côtés opposés, oscillant sur un plan parallèle auxdits côtés.

5. Perche télescopique (1) selon l'une ou plusieurs des revendications précédentes, dans laquelle ledit collier (17) est fixé au profilé tubulaire inférieur au moyen d'une paire de platines (18) qui sont fixées sur une extrémité du profilé tubulaire inférieur (2), qui s'étendent vers le profilé tubulaire supérieur (3) et qui sont reçues dans des gorges respectives situées sur le dernier.

6. Perche télescopique (1) selon la revendication 5, dans lequel deux évidements sont situés sur les platines, les dents respectives (22) du collier (17) coulissent à l'intérieur desdits évidements, et les platines (18) ont une forme spatiale dont la projection incluse dans la projection de la forme spatiale du profilé tubulaire inférieur (2).

7. Perche télescopique (1) selon la revendication 5 ou 6, dans laquelle des moyens élastiques (23) sont insérés entre les platines (18) et le collier (17) pour provoquer l'action de retour du collier vers les platines.

8. Perche télescopique (1) selon l'une ou plusieurs des revendications précédentes, dans laquelle la barre de liaison (27) est connectée au levier (16) au moyen du pivot d'articulation (24) du levier.

9. Perche télescopique (1) selon la revendication 8, dans laquelle le système de blocage et de levage comprend une tête de came (26) du levier (16) et une petite plaque de frappe (30) pour la tête de came, parallèle à l'élément de friction (28), de sorte que pendant la première étape du mouvement de fermeture du levier la distance entre l'élément de friction et la plaque de frappe est réduite pour pincer entre ceux-ci l'un des flancs (33) de la gorge (29) du profilé tubulaire supérieur (3) à l'intérieur de laquelle coulisse l'élément de friction (28).

10. Perche télescopique (1) selon la revendication 9, dans lequel un ressort cintré (31) est inséré entre l'élément de friction (28) et la plaque de frappe (30) pour maintenir une distance entre la plaque de frappe et l'élément de friction.

11. Perche télescopique (1) selon l'une ou plusieurs des revendications précédentes, dans laquelle le système de blocage et de levage comprend une barre de connexion (35) articulée à une extrémité sur le levier (16) et attachée à l'autre extrémité sur un sabot (37) qui coulisse dans un canal creux (38) dans le profilé tubulaire inférieur (2).

12. Perche télescopique (1) selon la revendication 11, dans laquelle un arrêt est prévu sur le profilé inférieur (2) pour arrêter le sabot (37) quand le levier (16) a terminé la première étape du mouvement de fermeture.

13. Perche télescopique (1) selon la revendication 12, dans laquelle un dispositif de sécurité de relâchement (40) est monté dans ledit levier (16) pour accrocher ledit sabot coulissant (37) quand le mouvement de fermeture du levier est terminé.

14. Perche télescopique (1) selon la revendication 13, dans lequel le dispositif de sécurité (40) peut être relâché au moyen d'un bouton-poussoir (44) accessible de l'extérieur du levier (16), ledit bouton-poussoir étant abrité à l'intérieur d'un évidement (47) du levier.

15. Perche télescopique (1) selon l'une ou plusieurs des revendications précédentes, dans laquelle des éléments élastiques (6) sont montés à chaque extrémité libre du profilé tubulaire supérieur (3) ou du profilé tubulaire inférieur (2) pour absorber le mouvement de soulèvement du profilé tubulaire supérieur en relation au profilé tubulaire inférieur, lesdits éléments d'extrémité élastiques étant couplés au profilé tubulaire supérieur ou au profilé tubulaire inférieur au moyen d'un accouplement antirotation.

16. Perche télescopique (1) selon la revendication 15, dans lequel un moyen de centrage (10 ; 11) est inséré entre les éléments d'extrémité élastiques (6) et le profilé tubulaire supérieur ou inférieur pour centrer l'élément d'extrémité élastique en relation au profilé tubulaire inférieur ou supérieur pendant son mouvement de compression.

17. Perche télescopique (1) selon l'une ou plusieurs des revendications précédentes, dans laquelle ledit profilé tubulaire supérieur et ledit profilé tubulaire inférieur (3 ; 2) présentent des gorges (5 ; 4) dans une direction longitudinale, alignées l'une avec l'autre, la gorge (5) d'un profilé (3) étant nichée à l'intérieur de la gorge (4) de l'autre profilé (2) pour permettre le couplage en coulissement desdits profilés supérieur et inférieur.
